# DEMANDE DE BREVET EUROPEEN

(11) **EP 2 108 626 A1**
(43) Date de publication de la demande: **14.10.2009**
(21) Numéro de dépôt: 09157724.7
(22) Date de dépôt: 09.04.2009
(51) Int. Cl.: C03C 25/10, C03C 25/46, E04B 1/76

(54) **Produit d'isolation thermique a base de laine minerale et de poudre metallique a faible emissivite**

(30) Priorité: 11.04.2008 FR 0852442
(71) Demandeur: Electricité de France, 75008 Paris (FR)
(72) Inventeur: Yrieix, Bernard, 77250, Moret sur Loing (FR); Milleville, Pierre-Henri, 77670, Vernou la Celle (FR)
(74) Mandataire: Cabinet Plasseraud

(57) **Abrégé**

L'invention concerne un matériau thermoisolant pour l'isolation thermique de bâtiments, comprenant au moins une couche constituée essentiellement de laine minérale et de 0,1 % à 8 % en poids, rapporté au poids total des fibres de laine minérale, d'au moins une poudre métallique à l'état non oxydé, de diamètre équivalent moyen compris entre 0,5 et 30 µm, constituée d'un matériau métallique présentant, à l'état massif, une émissivité inférieure à 0,2, de préférence inférieure à 0,1, ladite poudre métallique présentant en outre une résistance à la corrosion telle que l'augmentation de l'émissivité de la poudre métallique après un essai d'oxydation, réalisé selon les normes ISO 9227, 3231 et 21207, soit inférieure à 0,1, ainsi que l'utilisation d'un tel matériau pour l'isolation thermique de bâtiments.

## Description

La présente invention concerne un nouveau matériau thermoisolant à base de laine minérale et d'au moins une poudre métallique à faible émissivité et à faible diamètre.

Les fibres de laine minérale, englobant la laine de verre et la laine de roche, sont bien connues pour leur pouvoir d'isolation thermique. Il s'agit de matériaux formés par des fibres courtes, ayant une longueur de l'ordre du centimètre, assemblées de manière désordonnée et formant des structures relativement épaisses, ayant généralement une épaisseur à l'état non comprimé de plusieurs centimètres. La laine minérale doit par conséquent être distinguée des tissus de verre constitués de fibres longues assemblés par tissage et qui présentent des épaisseurs et un pouvoir d'isolation thermique plus faibles que les laines minérales et une résistance mécanique considérablement plus forte que celle-ci.

La laine minérale est très utilisée en particulier pour l'isolation thermique des bâtiments où elle représente 60% du marché, principalement sous la forme de panneaux rigides ou de matelas à dérouler, ou encore de produits en vrac.

La très grande majorité des produits à base de laine minérale utilisés en tant que matériaux isolants dans l'industrie du bâtiment sont à faible voire très faible masse volumique. La laine minérale est aussi très largement utilisée dans l'industrie pour l'isolation de parois et tuyauteries portées à des températures élevées. Pour ces utilisations, les produits utilisés à base de laine minérale sont de masse volumique faible à moyenne.

De manière générale, pour les produits d'isolation thermique de masse volumique inférieure à environ 40 kg/m³, la réduction de la masse volumique de produits d'isolation thermique se traduit par une augmentation de la conductivité thermique apparente également appelée « transmittivité thermique », due principalement à l'augmentation de la transparence desdits matériaux au rayonnement thermique, donc de la contribution radiative à la transmittivité thermique, également appelée « radiativité » (EN ISO 9288).

Une approche intéressante pour diminuer la radiativité des matériaux d'isolation thermique à base de laine minérale a été l'ajout de particules réfléchissant et/ou absorbant le rayonnement thermique, par exemple des poudres de charbon, de graphite, de métaux ou d'oxydes métalliques.

Ainsi, la demande internationale WO 00/17120 par exemple décrit des produits d'isolation thermique à base de fibres minérales artificielles contenant des particules de graphite. L'ajout de particules de graphite présente toutefois l'inconvénient d'augmenter la masse combustible du matériau.

D'autre part, la demande de brevet WO 00/17121 décrit des produits d'isolation thermique à base de fibres minérales artificielles contenant des additifs particulaires sélectionnés parmi le silicium, l'aluminium, le mica, la silice et le dioxyde de titane, fixés sur les fibres minérales par l'intermédiaire d'un liant. Ces additifs ont toutefois une faible efficacité intrinsèque. Un abaissement significatif de la conductivité thermique nécessite par conséquent l'introduction de quantités importantes de particules ce qui augmente de manière non négligeable le coût des matériaux thermoisolants. L'aluminium, divulgué dans WO 00/17121 comme étant le matériau préféré, présente, certes, une bonne efficacité à l'état non oxydé, mais est très sensible à la corrosion et se transforme rapidement, à l'échelle de la durée de vie d'un matériau thermoisolant, en oxyde et perd son pouvoir de réduction de la radiativité.

La Demanderesse, dans le cadre de ses recherches pour tester et mettre au point de nouveaux matériaux particulaires susceptibles de réduire la radiativité des laines minérales, a découvert l'importance déterminante d'une caractéristique physique particulière des additifs particulaires susceptibles d'être incorporés dans des matériaux thermoisolants de faible masse volumique. Cette caractéristique physique est l'émissivité des matériaux formant les poudres ajoutées.

Lorsqu'un rayonnement électromagnétique arrive à la surface d'un corps opaque, il peut être soit réfléchi soit absorbé puis réémis par ledit corps. L'importance relative des fractions de rayonnement réfléchi d'une part et de rayonnement absorbé et réémis d'autre part dépend de la nature chimique du corps considéré.

On définit ainsi l'émissivité d'un corps réel comme étant le rapport de la quantité de rayonnement émis par ce corps à une température donnée au rayonnement émis, à la même température, par le corps noir qui, par définition, absorbe et réémet la totalité du rayonnement qu'il reçoit. Les méthodes de détermination de l'émissivité par spectrométrie sont relativement simples et familières à l'homme du métier (voir par exemple l'article de Philippe Hervé intitulé « Mesure de l'émissivité thermique » publié dans Les Techniques de l'Ingénieur, volume R2737). Des valeurs d'émissivité de nombreux matériaux, et notamment de nombreux métaux, sont disponibles sous forme de tables (Handbook of Optical Constants of Solids, volume 2, Edward D. Palik, ou CRC Handbook of Chemistry and Physics, 60ème édition).

Il ressort de ces tables que les métaux à l'état « métallique » c'est-à-dire à degré d'oxydation zéro ont des émissivités considérablement inférieures aux oxydes et hydroxyles correspondants.

Les valeurs d'émissivité indiquées dans la présente demande sont les valeurs mesurées à une température de 20 °C.

Le mérite de la Demanderesse a été de découvrir que toutes les poudres susceptibles d'être incorporées dans un matériau thermoisolant afin de réduire la conductivité thermique de celui-ci n'étaient pas équivalentes et que l'émissivité du matériau formant la poudre était un paramètre déterminant permettant de prévoir l'efficacité de la poudre en termes de réduction de la radiativité. La Demanderesse a ainsi constaté qu'une poudre réduisait d'autant plus efficacement la radiativité, c'est-à-dire la transparence au rayonnement infrarouge, d'un matériau que son émissivité était faible.

La Demanderesse a également observé que l'efficacité des poudres était d'autant plus importante que leurs dimensions étaient petites. Cette augmentation de l'efficacité liée à la diminution de la taille des particules connaît toutefois une limite au-delà de laquelle les particules ne réfléchissent plus le rayonnement reçu et deviennent totalement inefficaces en tant qu'agents réduisant la radiativité des matériaux les contenant. La Demanderesse a ainsi constaté que les particules perdaient leur pouvoir réfléchissant lorsque leur taille devenait significativement inférieure à la longueur d'onde du rayonnement infrarouge dont il s'agit d'empêcher la propagation.

La Demanderesse a par ailleurs constaté que la plupart des matériaux particulaires métalliques utilisés actuellement en tant que réducteurs de la radiativité de matériaux thermoisolants, et en particulier l'aluminium (proposé dans WO 00/17121), le fer et le cuivre non alliés, étaient relativement sensibles à la corrosion lorsqu'ils étaient sous forme de fines particules et exposés à des températures élevées et/ou à une humidité importante. Or, comme indiqué ci-dessus, les oxydes et hydroxydes métalliques ont généralement une émissivité du rayonnement infrarouge nettement supérieure à celle des métaux correspondants et l'oxydation progressive de ces derniers entraîne par conséquent une baisse du pouvoir d'isolation thermique des produits les contenant. Pour assurer la pérennité du pouvoir isolant des matériaux isolants thermiques contenant des particules métalliques, il est par conséquent important de sélectionner des métaux résistant à la corrosion dans des conditions d'humidité et/ou de température élevée.

Lors de l'incorporation de poudres métalliques à faible émissivité dans des laines minérales, la Demanderesse a toutefois rencontré un problème lié à surface relativement faible, disponible pour la fixation des particules. En effet, en dépit du fait que la radiativité d'un matériau est en principe d'autant plus réduite que la quantité de particules à faible émissivité est importante, on a observé, au-delà d'une certaine quantité de poudre, une augmentation de la conductivité, c'est-à-dire une diminution du pouvoir isolant du matériau. La Demanderesse attribue cette augmentation de la conductivité thermique globale du matériau à la conduction thermique solide entre particules métalliques en contact direct les unes avec les autres. Il est ainsi apparu que, lorsqu'on incorporait des particules métalliques à faible émissivité dans des matériaux thermoisolants à base de fibres minérales, il était essentiel de ne pas dépasser une certaine densité de particules dans le matériau.

Pour mettre au point la présente invention la Demanderesse a par conséquent tenu compte des différents problèmes énoncés ci-dessus et a sélectionné des particules métalliques à faible émissivité, présentant une bonne résistance à la corrosion et une granulométrie optimale, et les a utilisées en des quantités inférieures à celles induisant une conductivité thermique solide.

La présente invention a par conséquent pour objet un matériau thermoisolant pour l'isolation thermique de bâtiments, comprenant au moins une couche constituée essentiellement de laine minérale et de 0,1 % à 8 % en poids, rapporté au poids total des fibres de laine minérale, d'au moins une poudre métallique à l'état non oxydé, de diamètre équivalent moyen compris entre 0,5 et 30 µm, constituée d'un matériau métallique présentant, à l'état massif, une émissivité inférieure à 0,2, de préférence inférieure à 0,1, choisi parmi le titane, le zirconium, le hafnium, le vanadium, le niobium, le tantale, le silicium, l'étain, le nickel, le molybdène, le manganèse et le chrome et parmi les alliages métalliques à base de cuivre, de zinc, d'étain, de titane, de zirconium, de niobium, de tantale, de fer et de nickel.

La poudre métallique non oxydée, utilisée dans la présente invention présente une excellente résistance à la corrosion.

On détermine cette résistance à la corrosion des métaux choisis pour constituer les particules utilisables dans la présente invention en mesurant l'émissivité des poudres de ces métaux avant et après un essai de corrosion réalisé selon les normes ISO 9227, 3231 et 21207. La résistance à la corrosion des poudres est telle que l'augmentation de l'émissivité observée est inférieure à 0,1.

L'invention a en outre pour objet un procédé d'isolation thermique d'un bâtiment, comprenant le recouvrement d'une ou plusieurs surfaces extérieures ou intérieures dudit bâtiment par une ou plusieurs couches superposées d'un matériau thermoisolant tel que défini ci-dessus, ou l'incorporation d'une ou de plusieurs couches d'un tel matériau dans la structure des parois dudit bâtiment, l'épaisseur totale de l'ensemble des couches superposées étant suffisante pour obtenir une résistance thermique au moins égale à 2.4 m².K/W pour l'isolation thermique des murs et au moins égale à 5 m².K/W pour l'isolation thermique des toitures.

Enfin, l'invention a pour objet l'utilisation d'un matériau thermoisolant tel que défini ci-dessus pour l'isolation thermique des parois d'un bâtiment. Cette utilisation concerne l'isolation thermique aussi bien pour la construction de bâtiments neufs que pour la rénovation de bâtiments anciens.

Comme expliqué en introduction, la réduction de la radiativité de matériaux thermoisolants est d'autant plus importante que la masse volumique de ces matériaux est faible. Par conséquent, dans les matériaux thermoisolants de la présente invention, ladite couche constituée de laine minérale et de poudre métallique présente, à l'état non comprimé, une masse volumique comprise entre 6 et 40 kg/m³, de préférence comprise entre 10 et 30 kg/m³.

L'épaisseur de ladite couche constituée de laine minérale et de particules métalliques, à l'état non comprimé, est de préférence au moins égale à 80 %, en particulier au moins égale à 90 %, et idéalement au moins égale à 95 % de l'épaisseur totale du matériau thermoisolant.

Celui-ci peut en effet comporter, outre ladite couche de laine minérale et de poudre métallique, une ou plusieurs couches de protection, de renfort, de séparation, d'imperméabilisation etc. formées par exemple par des plaques, des films, des feuilles ou des textiles, tissés ou non tissés.

La couche (ou l'ensemble des couches) de laine minérale et de particules métalliques du matériau thermoisolant de la présente invention, a de préférence une conductivité thermique λ, mesurée selon la norme ISO 8301, inférieure à 0,045 W/m.K, de préférence inférieure à 0,038 W/m.K.

Les valeurs de conductivité thermique indiquées dans la présente demande doivent être comprises comme étant celles du matériau à l'équilibre d'hydratation.

On peut citer en tant que matériaux métalliques préférés qui satisfont particulièrement bien aux critères d'émissivité et de résistance à la corrosion décrits ci-dessus les alliages métalliques choisis parmi ceux à base de cuivre, de titane, de zirconium et de nickel. Pour les mêmes raisons, ladite poudre est également constituée de préférence d'un matériau métallique choisi parmi le titane, le zirconium, le silicium, le nickel et le chrome.

On peut citer à titre d'exemples de matériaux métalliques intéressants les cuivres faiblement alliés, les laitons, de préférence les laitons à teneur en zinc inférieure ou égale à 15% en poids, les bronzes, de préférence les bronzes à teneur en étain inférieure ou égale à 13% en poids, les cupro-aluminium, de préférence les cupro-aluminium contenant du nickel, les cupronickel, les maillechorts, les cupro-silicium, les fontes, de préférence les fontes fortement alliées au chrome et au silicium, les aciers faiblement alliés, de préférence les aciers faiblement alliés au Cr - Ni et au Cr - Mo, les aciers fortement alliés, de préférence les aciers fortement alliés au Cr - Ni et au Cr - Mo, les aciers inoxydables, de préférence les aciers inoxydables austénitiques, austéno-ferritiques et martensitiques, les alliages Fe - Ni - Cr, de préférence les alliages Fe - Ni - Cr super austénitiques, les alliages Ni - Cu, les alliages Ni - Cr, les alliages Ni - Fe, les alliages Ni - Mo, les alliages à base d'étain, et les alliages à base d'étain et de plomb.

Les poudres métalliques non oxydées, utilisées dans la présente invention, ont de préférence un diamètre équivalent moyen compris entre 2 et 10 µm, en particulier entre 3 et 7,5 µm.

Le « diamètre équivalent » au sens où ce terme est utilisé dans la présente demande, est le diamètre du cercle possédant la même surface que la surface projetée de la particule orientée aléatoirement. Le diamètre équivalent moyen d'une poudre, c'est-à-dire d'une population de particules ayant une distribution granulométrique donnée, peut être mesuré par exemple par diffraction laser.

Le diamètre équivalent moyen de la poudre n'est toutefois pas la seule caractéristique physique à prendre en considération pour optimiser l'efficacité de celle-ci.

En effet, comme expliqué précédemment, la Demanderesse a découvert que l'efficacité des particules métalliques était d'autant plus grande que leur dimension était petite mais que cette dimension ne devait pas être sensiblement inférieure à la longueur d'onde du rayonnement incident.

Or, le rayonnement « incident » dont il s'agit d'empêcher la propagation ne peut pas être caractérisé par une longueur d'onde donnée, mais est en fait un spectre de rayonnement, plus précisément le spectre d'émission des fibres de laine minérale, dont le comportement radiatif est celui d'un corps gris, c'est-à-dire respectant la répartition d'intensité spectrale du corps noir qui varie en fonction de la température mais dont l'allure générale est connue. Ce spectre bien connu du corps noir (voir CRC Handbook of Chemistry and Physics, David R LIDE, 79ème édition, 1998- 1999, Black Body Radiation, page 10-214 et 10-215) n'a pas la forme d'une courbe gaussienne mais présente un maximum d'émission décalé vers les faibles longueurs d'ondes du spectre. Dans un mode de réalisation particulièrement préféré de la présente invention, la distribution granulométrique des particules présente une allure sensiblement similaire à celle du spectre d'émission du corps noir, autrement dit la distribution granulométrique des particules métalliques présente de préférence un maximum situé aux faibles diamètres équivalents avec une traine dans la zone des dimensions plus importantes. Une telle distribution non gaussienne peut être obtenue, de manière connue, par un mélange de plusieurs poudres. Il est bien entendu possible d'obtenir la distribution granulométrique souhaitée en mélangeant plusieurs poudres constituées de matériaux différents.

L'ajout de particules métalliques à l'état non oxydé est efficace en des quantités relativement faibles, généralement inférieures à 6 % en poids.

La ou les poudre(s) métallique(s) est/sont de préférence présente(s) à raison de 3 à 6%, en poids, rapporté au poids des fibres de laine minérale.

Les laines minérales utilisables pour les produits d'isolation thermique de la présente invention sont des matériaux usuels, disponibles sur le marché, constitués de fibres ayant de préférence un diamètre moyen inférieur à 10 µm.

La très faible taille des particules utilisées fait qu'elles sont faciles à incorporer dans les couches de laine minérale. Elles adhèrent facilement aux fibres par simple contact à sec.

Dans un mode de réalisation préféré, les particules sont pulvérisées à sec sur les fibres de laine minérale préalablement ensimées avec une composition de monomères polymérisables, puis on procède à la polymérisation de ces monomères.

Les particules peuvent également être fixées sur les fibres par projection d'une dispersion de particules, avant ou pendant le procédé d'assemblage des fibres. La fixation des particules peut être renforcée de manière connue par l'utilisation d'un adhésif appliqué préalablement sur les fibres.

Les particules métalliques sont de préférence fixées sur les fibres de laine minérale au moyen d'un liant approprié. Les liants susceptibles d'être utilisés pour fixer les particules métalliques sur les fibres de laine minérale sont connus et décrits par exemple dans la demande internationale WO 00/17121. Il peut s'agir de liants minéraux, tels que des silicates, silicophosphates, aluminophosphates de lithium, de sodium ou de potassium, ou bien de liants organiques polymères, thermoplastiques ou thermodurcissables.

Le liant représente généralement moins de 10 %, de préférence moins de 7 % et en particulier moins de 5 % en poids rapporté au poids total de fibres minérales.

La poudre métallique peut en principe être fixée sur les fibres minérales selon n'importe quel procédé approprié connu dans l'état de la technique, par exemple par enduction des fibres avec une solution du liant minéral ou polymère, puis pulvérisation de la poudre métallique, ou encore par application sur les fibres d'une suspension de la poudre métallique dans une solution du liant minéral ou polymère.

La Demanderesse a constaté qu'un procédé de fixation particulier comportant, contrairement à ceux utilisés habituellement dans le domaine technique, une étape de polymérisation *in situ* d'un liant monomère était particulièrement intéressant du point de vue de la bonne répartition des particules métalliques à la surface des fibres minérales.

La Demanderesse a en outre constaté que l'état d'agrégation et la répartition des particules métalliques à la surface des fibres minérales et au sein du produit d'isolation fini avaient une grande importance sur l'efficacité de l'ajout de poudres.

Ainsi, pour une même quantité de poudre métallique ajoutées, la radiativité des produits obtenus était d'autant plus réduite que les particules métalliques étaient bien individualisées et non agrégées les unes aux autres. Dans un mode de réalisation préféré du produit d'isolation thermique de la présente invention, au moins 90 %, de préférence au moins 95 % en nombre des particules métalliques réfléchissant le rayonnement infrarouge sont présentes sous une forme individualisée, non agrégées les unes aux autres.

Le produit d'isolation thermique de la présente invention peut contenir en outre toutes sortes d'autres matériaux organiques ou minéraux destinés à remplir différentes fonctions, par exemple des matériaux de renfort ou de support, des matériaux décoratifs, des matériaux imperméables à l'eau et/ou à l'air, des matériaux d'isolation acoustique etc. Ces matériaux peuvent être par exemple des films, des plaques rigides ou souples, expansées ou non expansée, des particules, des fibres longues ou courtes, ou encore des textiles tissés, tricotés ou non tissés. La proportion de ces matériaux ne dépasse toutefois pas 40 % en poids du produit d'isolation thermique de la présente invention.

Autrement dit, la couche constituée de laine minérale et de poudre métallique représente au moins 60 %, de préférence au moins 80 % et en particulier au moins 95 % du poids total du matériau thermoisolant.

## Revendications

1. Matériau thermoisolant pour l'isolation thermique de bâtiments, comprenant au moins une couche constituée essentiellement de laine minérale et de 0,1 % à 8 % en poids, rapporté au poids total des fibres de laine minérale, d'au moins une poudre métallique à l'état non oxydé, de diamètre équivalent moyen compris entre 0,5 et 30 µm, constituée d'un matériau métallique présentant, à l'état massif, une émissivité inférieure à 0,2, de préférence inférieure à 0,1, choisi parmi le titane, le zirconium, le hafnium, le vanadium, le niobium, le tantale, le silicium, l'étain, le nickel, le molybdène, le manganèse et le chrome et parmi les alliages métalliques à base de cuivre, de zinc, d'étain, de titane, de zirconium, de niobium, de tantale, de fer et de nickel.

2. Matériau thermoisolant selon la revendication 1, **caractérisé par le fait que** ladite couche constituée de laine minérale et de poudre métallique présente, à l'état non comprimé, une masse volumique comprise entre 6 et 40 kg/m³.

3. Matériau thermoisolant selon la revendication 1 ou 2, **caractérisé par le fait que** le matériau métallique formant la poudre métallique est choisi parmi le titane, le zirconium, le silicium, le nickel et le chrome et parmi les alliages métalliques à base de cuivre, de titane, de zirconium et de nickel.

4. Matériau thermoisolant selon l'une quelconque des revendications précédentes, **caractérisé par le fait que** la poudre métallique a un diamètre équivalent moyen compris entre 2 et 10 µm, de préférence entre 3 et 7,5 µm.

5. Matériau thermoisolant selon l'une quelconque des revendications précédentes, **caractérisé par le fait que** la distribution granulométrique de la poudre est une courbe non gaussienne avec un maximum situé vers les faibles diamètres équivalents et une traine dans la zone des dimensions plus importantes.

6. Matériau thermoisolant selon l'une quelconque des revendications précédentes, **caractérisé par le fait que** la distribution granulométrique présente une allure sensiblement similaire à celle du spectre d'émission du corps noir.

7. Matériau thermoisolant selon l'une quelconque des revendications précédentes, **caractérisé par le fait qu'**il comprend de 3 à 6% en poids, rapporté au poids total des fibres de laine minérale, de poudre métallique présentant, à l'état massif, une émissivité inférieure à 0,2.

8. Matériau thermoisolant selon l'une quelconque des revendications précédentes, **caractérisé par le fait que** ladite couche constituée de laine minérale et de poudre métallique représente au moins 60 %, de préférence au moins 80 % et en particulier au moins 95 % en poids du poids total du matériau thermoisolant.

9. Procédé d'isolation thermique d'un bâtiment, comprenant le recouvrement d'une ou plusieurs surfaces extérieures ou intérieures dudit bâtiment par une ou plusieurs couches superposées d'un matériau thermoisolant tel que défini dans les revendications précédentes, ou l'incorporation d'une ou de plusieurs couches d'un tel matériau dans la structure des parois dudit bâtiment, l'épaisseur totale de l'ensemble des couches superposées étant suffisante pour obtenir une résistance thermique au moins égale à 2.4 m².K/W pour l'isolation thermique des murs et au moins égale à 5 m².K/W pour l'isolation thermique des toitures.

10. Utilisation d'un matériau thermoisolant selon l'une quelconque des revendications 1 à 8 pour l'isolation thermique des parois et toitures de bâtiments.
